Europäisches Patentamt

European Patent Office    ⊙ Veröffentlichungsnummer: **0 282 936**

Office européen des brevets                                **A2**

## (12) EUROPÄISCHE PATENTANMELDUNG

(21) Anmeldenummer: **88103963.0**

(22) Anmeldetag: **12.03.88**

(30) Priorität: **20.03.87 US 28506**

(43) Veröffentlichungstag der Anmeldung:
**21.09.88 Patentblatt 88/38**

(84) Benannte Vertragsstaaten:
**DE FR GB IT**

(51) Int. Cl.⁴: **F16C 9/02**

(71) Anmelder: **DEERE & COMPANY**
**1 John Deere Road**
**Moline Illinois 61265(US)**

(72) Erfinder: **Terkovich, Branko A.**
**170 Lakeside Drive South**
**Piscataway New Jersey 08854(US)**

(74) Vertreter: **Feldmann, Bernhard et al**
**DEERE & COMPANY European Office, Patent**
**Department Steubenstrasse 36-42 Postfach**
**503**
**D-6800 Mannheim 1(DE)**

(54) Lagervorrichtung.

㊗ Eine Lagervorrichtung enthält ein Gehäuse (8)
und einen Lagerring (16), die jeweils eine konische
Sitzfläche (36, 44) aufweisen und an diesen zusammengefügt werden können. Es sind Halter (54) vorgesehen, die mittels Spannmitteln (64) an dem
Gehäuse (8) oder dem Lagerring (16) befestigt und
gegen den jeweils anderen Teil zur Anlage gebracht
werden, um die starre Verbindung des Gehäuses
(8) mit dem Lagerring (16) zu bewirken.

Fig. 1

## Lagervorrichtung

Die Erfindung betrifft eine Lagervorrichtung für eine Welle, insbesondere für eine Kurbelwelle eines Drehkolbenmotors, mit einem inneren Lagerring zur drehbaren Aufnahme der Welle, der eine äußere, konisch verlaufende Sitzfläche aufweist und mittels Spannmitteln in einem entsprechend ausgebildeten konischen Sitz gegenüber einem Gehäuse festlegbar ist.

Eine derartige Lagervorrichtung (US-A-3,193,187) für einen Drehkolbenmotor mit mehreren Drehkolben besteht aus einem Lagerring, der eine sich radial erstreckende Schulter und eine äußere, konisch verlaufende Sitzfläche aufweist. In die Schulter sind mehrere Gewindebohrungen eingebracht. Der Lagerring wird im eingebauten Zustand von einem Zwischenring mit einer inneren, konisch verlaufenden und einer äußeren, zylindrisch verlaufenden Sitzfläche konzentrisch umgeben. Der Zwischenring selbst wird in einen zylindrischen Lagersitz eines Gehäuses eingefügt. Zum Verspannen des Zwischenrings mit dem Lagerring sind Schrauben vorgesehen, die sich durch Axialbohrungen in dem Zwischenring erstrecken und in die Gewindebohrungen eingeschraubt werden. Im eingebauten Zustand koimen die Schulter und der Zwischenring an dem Gehäuse zur Anlage.

Diese Lagervorrichtung ist insofern nachteilig, als sie zuviele mit hoher Präzision herzustellende Einzelteile aufweist. Ferner ist eine gegenseitige Verspannung der Teile der Lagervorrichtung auch dann möglich, wenn die Schulter gar nicht an dem Gehäuse anliegt, so daß Einstellfehler entstehen.

Die der Erfindung zugrundeliegende Aufgabe wird darin gesehen, eine Lagervorrichtung für eine Welle so zu gestalten, daß sie kostengünstig hergestellt und einfach zusammengebaut werden kann.

Diese Aufgabe ist durch die Lehre gemäß Patentanspruch 1 erfindungsgemäß gelöst worden.

Auf diese Weise kann der aus dem Stand der Technik bekannte Zwischenring entfallen, und eine Festsetzung der jeweiligen Teile erfolgt direkt durch das Heranziehen des Lagerrings an das Gehäuse. Die Spannmittel stützen sich dabei über mindestens einen Halter, der ein Kreisring, eine Platte oder mehrere kleinere Halter sein kann, an dem Gehäuse oder dem Lagerring ab.

In den Unteransprüchen sind die Erfindung vorteilhaft weiterentwickelnden Merkmale angegeben.

Der Vorteil mehrerer kleiner Halter liegt darin, daß diese auch unter beengten Verhältnissen eingebaut werden können. Die Ausbildung der oder des Halter(s) mit den entsprechenden Anlageflächen und der Nut ermöglicht eine gleichmäßige Anpressung der oder des Halter(s) an den Lagerring und/oder das Gehäuse, wobei die an die Trennfläche des konischen Sitzes angrenzenden Kanten der betreffenden Flächen innerhalb der Nut aufgenommen und somit nicht beschädigt werden.

In der Zeichnung ist ein nachfolgend näher beschriebenes Ausführungsbeispiel der Erfindung dargestellt. Es zeigt:

Figur 1 eine erfindungsgemäße Lagervorrichtung im Radialschnitt und

Figur 2 eine Ansicht der kompletten Lagervorrichtung in Figur 1 von links.

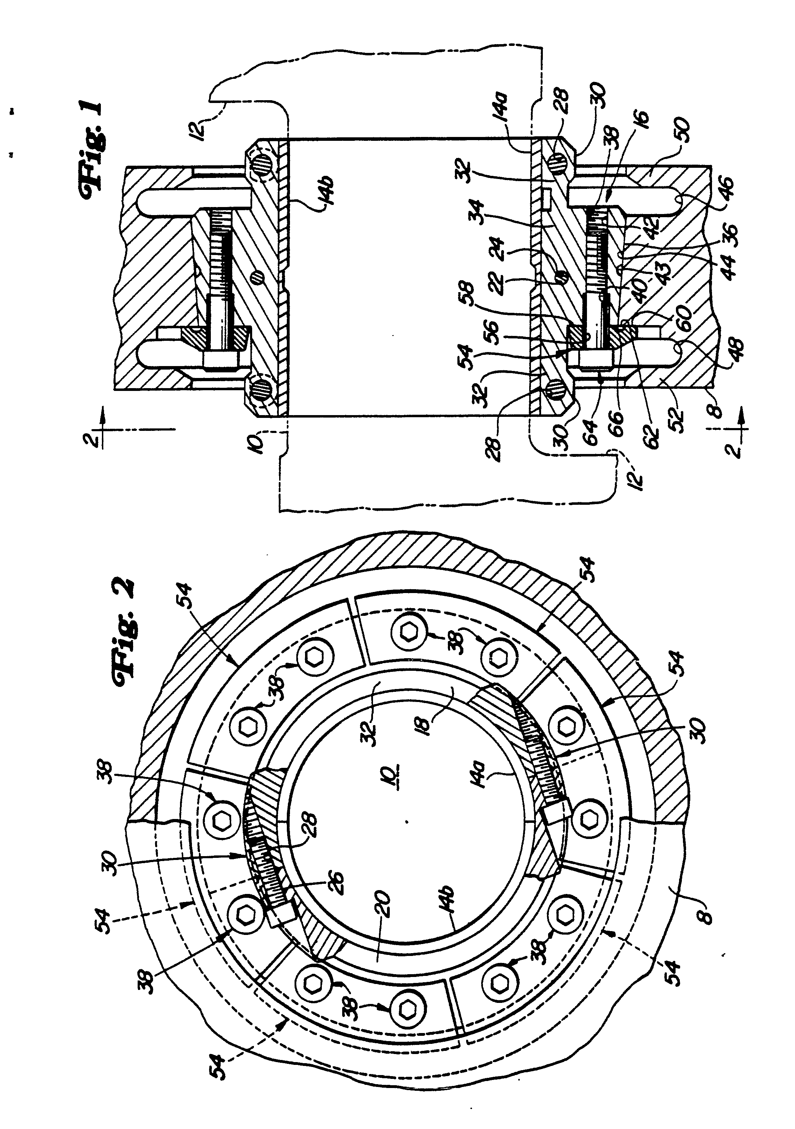

Ein Drehkolbenmotor mit mehreren Einheiten enthält gemäß einem in Figur 1 gezeichneten Ausschnitt ein Gehäuse 8 und eine Welle 10 in der Form einer Kurbelwelle mit Exzentern 12 zur drehbeweglichen Aufnahme mehrerer nicht gezeigter Drehkolben. Es ist weiterhin ein Lagerring 16 virgesehen, der aus zwei miteinander verschraubten Lagerhälften 18 und 20 zusammengesetzt ist und in sich herkömmliche, getrennte Lagerschalen 14 für die Welle 10 aufnimmt. Die Lagerhälften 18 und 20 sind miteinander über Zapfen 22, die in entsprechende Fassungen 24 eingesetzt werden, und vier Schrauben 26, die in Gewindebohrungen 28 eingedreht werden, verbunden. In Figur 2 sind die Schrauben 26 jeweils einer Seite des Lagerrings 16 zu sehen. Die Schrauben 26 und die Gewindebohrungen 28 sind in bogenförmigen Nocken 30 von Bünden 32 untergebracht, die sich axial von gegenüberliegenden Seiten des Lagerrings 16 erstrecken. Der Lagerring 16 hat eine zentrale Nabe 34 mit einer äußeren Sitzfläche 36 für einen Kraft- oder Reibschluß, der sich von einem Ende mit einem großen Durchmesser zu einem Ende mit einem kleinen Durchmesser erstreckt. Der Lagerring 16 enthält außerdem eine Vielzahl voneinander getrennter, sich axial durch die Nabe 34 erstreckende Bohrungen 38. Die Bohrungen 38 haben jeweils einen Bereich größeren und einen Bereich kleineren Durchmessers 40 und 42, wobei letzterer mit einem Gewinde versehen ist. Eine Ringnut 43 umgibt die Nabe 34, und Druckflüssigkeit kann dieser zugeführt werden, um den Ausbau der Lagervorrichtung aus dem Gehäuse 8 zu erleichtern.

Das Gehäuse 8 hat eine zentrale Öffnung mit einer inneren Sitzfläche 44 für einen Kraft- oder Reibschluß, die sich gleichmäßig in axialer Richtung von einem Ende mit größerem Durchmesser zu einem Ende mit kleinerem Durchmesser erstreckt. Auf jeder Seite des Gehäuses 8 befindet sich eine Ringnut 46, 48, die zumindest teilweise von jeweils einem Rand 50, 52 bedeckt wird.

Das Gehäuse 8 und der Lagerring 16 werden mittels einer Vielzahl bogenförmiger Halter 54 miteinander verbunden, von denen jeder eine Öffnung 56 enthält, die sich axial mit Bezug auf die Drehachse der Lagervorrichtung durch den jeweiligen Halter 54 erstreckt. Jeder Halter 54 ist mit einer inneren, sich radial erstreckenden, in axiale Richtung zeigenden Anlagefläche 58 versehen, die an dem Ende des geringen Durchmessers der Nabe 34 bzw. des Lagerrings 16 zur Anlage gebracht werden kann. Ob diese Anlagefläche 58 an dem Lagerring 16 zur Anlage gelangt, hängt davon ab, wie tief der Lagerring 16 in den konischen Sitz der Sitzflächen 36, 44 hineinreicht. Außerdem ist an jeden Halter 54 eine äußere, sich radial erstreckende und in axiale Richtung zeigende Anlagefläche 60 angearbeitet, die das Gehäuse 8 im Bereich des kleinen Durchmessers der geneigt verlaufenden Sitzfläche 44 beaufschlagt. Die Anlageflächen 58 und 60 sind in radialer Richtung durch eine Nut 62 oder durch eine sonstige Ausnehmung voneinander getrennt; sie liegen aber in diesem Ausführungsbeispiel in der selben radialen Ebene. Die Halter 54 und daher auch das Gehäuse 8 werden mit dem Lagerring 16 über Spannmittel 64, die als gewöhnliche Schrauben oder als Spannschrauben ausgebildet sind, verbunden, wozu sich die Spannmittel 64 durch die Öffnungen 56 erstrecken und in dem Bereich kleineren Durchmessers 42 in dem Lagerring 16 aufgenommen werden. Die Nut 62 überbrückt die Verbindungsstelle zwischen der Sitzfläche 36 und der Sitzfläche 44 an deren Enden mit dem kleineren Durchmesser und sorgt somit für einen Freiraum, so daß die Halter 54 nicht an den Ringkanten 66 des Gehäuses 8 anschlagen und diese zerstören, wenn das Gehäuse 8 mittels der Halter 54 und der Spannmittel 64 vollkommen auf den Lagerring 16 gezogen wird.

Es ist ersichtlich, daß grundsätzlich auch ein einziger Halter 54 ausreichen würde, der im radialen Querschnitt wie die vorbeschriebenen Halter 54 aufgebaut ist und einen flachen Kreisring darstellt; allerdings müßte möglicherweise einer der Ränder 50, 52 kleiner gehalten werden. Ferner ist es möglich, die Bohrungen 38 nicht in dem Lagerring 16, sondern in dem Gehäuse 8 anzuordnen und zwar so, daß der oder die Halter 54 dann in Figur 2 an die rechten Seitenflächen des Gehäuses 8 und des Lagerrings 16 angebracht werden und den Lagerring 16 in das Gehäuse 8 hineindrücken, anstatt ihn wie bisher hineinzuziehen.

## Ansprüche

1. Lagervorrichtung für eine Welle (10), insbesondere für eine Kurbelwelle eines Drehkolbenmotors, mit einem inneren Lagerring (16) zur drehbaren Aufnahme der Welle (10), der eine äußere, konisch verlaufende Sitzfläche (36) aufweist und mittels Spannmitteln (64) in einem entsprechend ausgebildeten konischen Sitz gegenüber einem Gehäuse (8) festlegbar ist, gekennzeichnet durch mindestens einen Halter (54), der an dem Gehäuse (8) und/oder dem Lagerring (16) mittels der Spannmittel (64) anpreßbar ist.

2. Lagervorrichtung nach Anspruch 1, dadurch gekennzeichnet, daß mehrere Halter (54) vorgesehen sind.

3. Lagervorrichtung nach Anspruch 1 oder 2, dadurch gekennzeichnet, daß der oder die Halter (54) bogenförmig ausgebildet sind.

4. Lagervorrichtung nach Anspruch 1, 2 oder 3, dadurch gekennzeichnet, daß der oder die Halter (54) jeweils eine Anlagefläche (58, 60) für den Lagerring (16) und für das Gehäuse (8) aufweisen.

5. Lagervorrichtung nach Anspruch 4, dadurch gekennzeichnet, daß sich die beiden Anlageflächen (58, 60) radial erstrecken und radial nebeneinander angeordnet sind.

6. Lagervorrichtung nach Anspruch 5, dadurch gekennzeichnet, daß sich zwischen den Anlageflächen (58, 60) eine Nut (62) erstreckt.

7. Lagervorrichtung nach einem oder mehreren der Ansprüche 4 bis 6, dadurch gekennzeichnet, daß sich die beiden Anlageflächen (58, 60) in einer gemeinsamen radialen Ebene erstrecken.

8. Lagervorrichtung nach einem oder mehreren der vorherigen Ansprüche, dadurch gekennzeichnet, daß die Nut (62) mit der Trennungslinie der konischen Sitzflächen (36, 44) fluchtet und mit seitlichem Abstand zu dieser endet.

9. Lagervorrichtung nach einem oder mehreren der vorherigen Ansprüche, dadurch gekennzeichnet, daß der oder die Halter (54) mit Öffnungen (56) zur Aufnahme der Spannmittel (64) versehen ist (sind), die Spannmittel (64) als Schrauben ausgebildet und in das Gehäuse (8) oder den Lagerring (16) einschraubbar sind.

Fig. 1

Fig. 2